# EUROPEAN PATENT APPLICATION

(11) **EP 1 514 586 A1**
(43) Date of publication of application: **16.03.2005**
(21) Application number: 04020213.7
(22) Date of filing: 26.08.2004
(51) Int. Cl.: B01D 39/08, B01D 39/16

(54) **Filtration media created by sonic welding**

(30) Priority: 29.08.2003 US 652896
(71) Applicant: Filtertek Inc., Hebron, Illinois 60043 (US)
(72) Inventor: Larkin, Larry, Lake Geneva WI 53147 (US); Boast, Andrew J., Fontana Wisconsin 53125 (US)
(74) Representative: Brose, D. Karl

(57) **Abstract**

A filtration media is made with a layer of felt and a layer of woven screen, the layer of felt and the layer of woven screen assembled on top of one another, and held together with a sonic weld. A method of manufacturing a filter includes the steps of placing at least two layers of filtration material on top of one another, and applying a sonic weld to hold together the layers. A method of filtration includes the steps of providing a housing containing a filtration material having a layer of felt and a layer of woven screen, wherein the layer of felt and the layer of woven screen are held together with a sonic weld; and passing a fluid through the filter housing such that the fluid passes through the filtration material.

## Description

### BACKGROUND

The present invention relates to a filter, a method of manufacturing a filtration media and a method of filtration using the filter. More particularly, the invention relates to a filter including at least two layers of filtration material assembled together by sonic welding, and a method of manufacturing a filtration media by assembling at least two layers of filtration media and sonically welding the layers together.

Many filters are made with multiple layers of filtration material bonded together. Multilayer filtration materials are useful as fluid filters, for example, as particulate filters for use in automobiles. Multilayer filtration, also known as serial filtration, may be used in automobile transmission fluid filters. Automatic transmissions require a filter to remove contaminating particulate materials, generated during the operation of the automatic transmission.

Current serial filtration media for use in automobile transmission filters include a layer of polyester felt and a layer of screen held together by a scrim of low melting point polyester adhesive, typically melting at 120°C. The polyester adhesive has a negative impact on the flow and pressure drop in the filter. The polyester adhesive, when applied under heat and pressure to bond the felt layer with the screen layer, oozes into the felt and screen pores, partially blocking the pores in the filtration media. In addition, the pressure from the adhesive application rollers causes the openings in the felt to be squeezed into a smaller size. Both the partial pore blockage and the pore squeezing that occur during the adhesive application affect the flow, the pressure drop and the particle size intercepted. Uneven pore blockage from the adhesive application can lead to further filtration problems, including uneven fluid flow across the filter, and dumping of contamination through the filter due to hydraulic, thermal, and mechanical shock.

### BRIEF SUMMARY

A filter and a method of manufacturing a filter have been invented which overcome the aforementioned problems. The filter and the method of manufacturing the filter allow for holding together of at least two materials using a sonic weld. The filtration material thus does not require the addition of adhesive, and the problems associated with adhesive in the filter material.

In a first aspect, the invention is a filtration media comprising a layer of felt and a layer of woven screen assembled on top of one another wherein the at least two layers are held together with a sonic weld.

In a second aspect, the invention is a filter comprising a housing, at least two layers of non-identical filtration material, assembled on top of one another, disposed within the housing, and the at least two layers of filtration material are held together with a sonic weld.

In a third aspect, the invention is a method of manufacturing a filtration media effective in trapping particles of about 70 microns and larger, by placing at least two layers of filtration material on top of one another and applying a sonic weld across a surface of the filtration media to hold together the at least two layers.

In a forth aspect, the invention is a method of filtration comprising the steps of providing a filter, the filter having a housing, and at least two layers of filtration material assembled on top of one another, disposed within the housing, wherein the at least two layers of filtration material are held together with a sonic weld; and passing a fluid through the filter housing such that the fluid passes through the filtration material.

The present invention solves the problems of the partial pore blockage and the pore squeezing by eliminating the need for adhesive in forming a serial filtration media. Further advantages of the present invention will become apparent in the description of the invention.

### BRIEF DESCRIPTION OF THE DRAWINGS

FIG. 1 is a perspective view of a preferred filtration media of the present invention;

FIG. 2 is a side elevational view of the filtration media of FIG 1;

FIG. 3 is a schematic diagram illustrating a method and apparatus for manufacturing the filtration media of FIG. 1;

FIG. 4 is an enlarged, partial side elevational view of the apparatus of FIG. 2;

FIG. 5 is a perspective view of a transmission filter of a preferred embodiment of the present invention;

FIG. 6 is a cross-sectional view of the transmission filter of FIG. 5; and

FIG. 7 is a top view assembly drawing of the parts making up the transmission filter of FIG. 5.

### DETAILED DESCRIPTION OF THE DRAWINGS AND PRESENTLY PREFERRED EMBODIMENTS

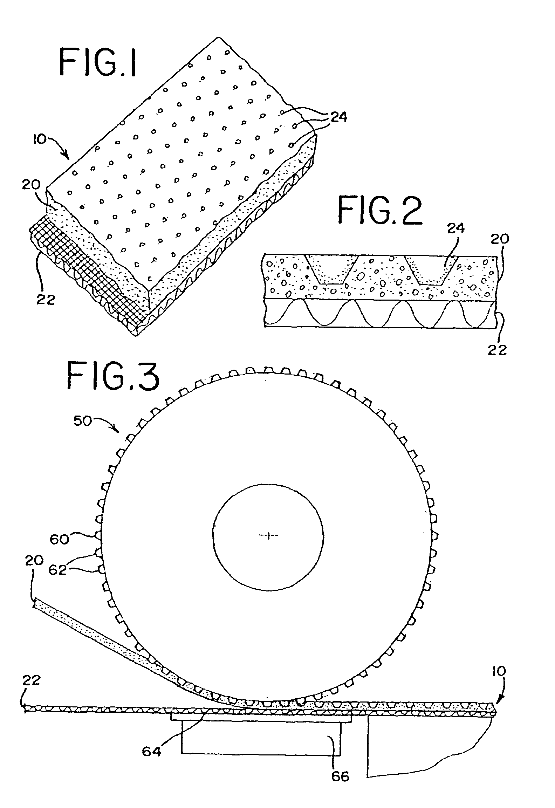

A preferred embodiment of the filtration media 10 of the present invention is shown in FIGS. 1 and 2. In the embodiment shown in FIG. 1, the filtration media 10 is a composite formed by assembling a layer of polyester felt 20 on top of a layer of woven screen 22 and holding together the layers together using sonic welding. A plurality of weld spots 24, resulting from the sonic welding process, are shown in the layer of polyester felt 20.
In a preferred embodiment, the layer of polyester felt 20 is a depth filtration media of polyester mechanically entangled felt. The depth filtration media of the present invention allows the particulate matter in the filtration fluid to be captured at many layers within the layer of polyester felt 20, retarding the blockage of the filtration media. In contrast, a flat layer of filtration media becomes blocked more quickly when particulate matter becomes trapped by the filtration media in a single layer sheet. The nominal rating for the preferred particle size exclusion of the layer 20 is about 40 to 70 microns, more preferably about 70 microns. The preferred thickness for the layer 20 is about 50 to 100 mils, more preferably about 100 mils.

The preferred layer 20 is manufactured as follows. The diameter of the starting polyester fiber threads used to form the layer 20 is in the range from about 2-6 deniers, more preferably about 4 3/4 denier of yarn. A binder is added to the polyester fiber threads to hold the fibers in place. The preferred binder is a phenolic resin that is inert to transmission fluid. Alternatively, a latex binder, a melamine binder, or any binder commonly known in the art may be used to hold the fibers in place. The layer of polyester felt formed from the fibers with the added phenolic binder is then heat cured to evaporate the solvents. In a preferred embodiment, the layer of polyester felt 20 is then calendered to compact the felt and thereby control the size of the particle exclusion cut off and the thickness of the layer 20. Alternatively, the layer 20 may be sonically welded to the woven screen 22 without calendering. The flow rate of the layer of polyester felt 20 is determined as a measure of the density of the layer 20. The desired flow rate of the filtration media 10 depends on the fluid to be filtered, the contaminating particle size cutoff, the flow rate of the layer of polyester felt, the layer of woven screen 22 to be used and the filter unit into which the filtration media 10 is inserted for use.

The layer 20 may be preferably manufactured in rolls to be fed into a sonic welding apparatus (described below). The layer 20 may be used in the filtration media 10 as a single layer, or alternatively, the layer 20 may be folded over double and held together with the layer 22 with sonic welds.

The preferred layer of woven screen 22 may be a square weave fabric, although there are numerous types of weaving patterns. The woven screen 22 is defined herein by the micron rating, which is the distance across the opening between the fibers, and the percent open area, which is determined by the diameter of the fiber used to weave the screen. In a preferred embodiment of the present invention, the micron rating for the screen is from about 40 microns to about 500 microns, more preferably about 80 microns. In a preferred embodiment, the percent open area is from about 30% to about 50%, more preferably about 40%. The preferred material for the woven screen is polyester, although nylon or other materials known to one of skill in the art may also be used. Additionally, the fibers of the woven screen 22 may have a binder to keep the fibers in place, or the woven screen my be heat set with heat and pressure to flatten the fibers where the fibers pass over and under each other and to lock the fibers in place. The preferred layer of woven screen is obtainable from Sefar, International Fabric Company, or Satti.

In addition to particle filtration, the layer of woven screen 22 provides additional support for the layer of polyester felt 20 and helps prevent the layer 20 from stretching over time with use, thereby changing the filtration characteristics of the layer 20. The layer 22 held together with the layer 20 also may help provide support to the layer 20 to help prevent dumping of particulate matter accumulated in the layer 20 when hydraulic or mechanical shock occurs to the filtration media 10.

In the normal course of filtering particulate matter from a fluid, the particulate is intercepted by the media and collects or builds up, or accretes on the media surface and in the interstitial spaces of the filter media, referred to as loading of the media or caking of the media. The particulate stays in place on the media due to an equilibrium of forces on the particulate and not due to the addition of any binder or cement. In addition, as the particulate is accreting on the surface of the media, the larger particles will tend to block some of the opening in the media and smaller particles that normally would pass through the media become trapped in the smaller openings created during accretion. The efficiency of the media increases as the filtration media becomes loaded with particulate.

If a mechanical or hydraulic shock is applied to a system that has collected particulate, the particulate matter is energized and becomes suspended again in the fluid. The energy imparted to the particulate by the shock, as well as the movement of the fluid driving the particulate, causes some of the particulate to be carried through the filtration media even if the particles are larger than the nominal rating of the media, because the media openings stretch due to the effect on the particulate by the energy of the shock and the movement of the fluid.

Therefore, the layer 22, held together with the layer 20 by sonic welding, helps to prevent stretching and dumping due to shock and fluid movement by collecting particulate in the weld spots 24 created by the sonic weld. When the particulate is collected in the weld spots 24, less particulate is released and energized during shock, allowing the filtration media to filter the appropriate sized particle.

In addition to the layers 20 and 22 described above, the filtration media 10 may include additional layers of filtration material held together with the layers 20 and 22. The additional layers of filtration material may be held together on top of the layer 20, between the layers 20 and 22, or beneath the layer 22. Each additional layer of filtration material may be a depth media or a layer of woven screen, or any filtration media commonly known in the art. The additional layer of filtration media may require alternative sonic weld conditions. The filtration media 10 may also be pleated after welding for use in a filtration unit.

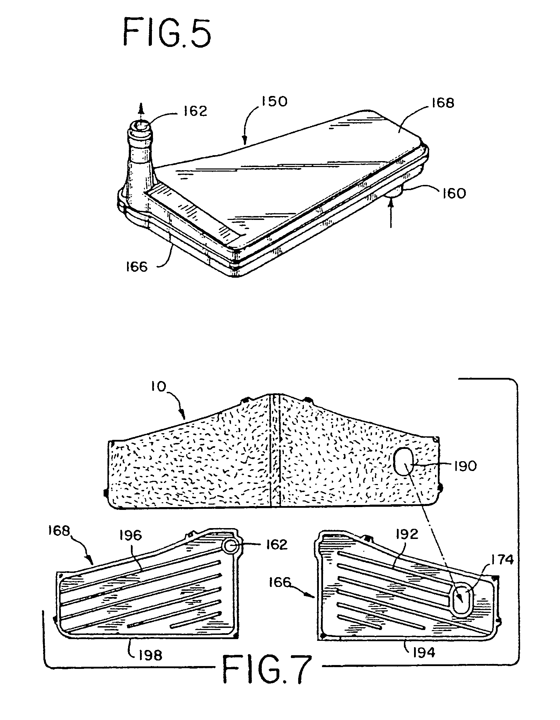

FIG. 3 illustrates an apparatus 50 and a method employed to sonically weld the layer of polyester felt 20 to the layer of woven screen 22 to create the preferred filtration media 10. An important aspect of the present invention is the ability to weld together the layer of polyester felt 20 and the layer of woven screen 22 using an ultrasonic welding process and thereby eliminating the need for adhesives to hold together the layers that comprise the filtration media 10. It has been found that by proper design of the sonic weld apparatus 50, the layer of polyester felt 20 and the layer of woven screen 22 may be held together without the addition of adhesives, thereby eliminating the problems due to adhesives used in the process of holding together the layers, such as partial blocking of the pores in the filtration media.

A sonic welding apparatus 50 of a preferred embodiment is shown in FIG. 3. The apparatus 50 comprises a roller 60 having a plurality of protrusions 62 and an ultrasonic horn 64 attached to a sonic driver 66. Generally, the roller 60 operates continually to feed the polyester felt layer 20 assembled on top of the woven screen layer 22 through the apparatus 50. Alternatively, the operation of the roller 60 may be indexed. As the layers 20 and 22 are fed into the apparatus 50, the plurality of protrusions 62 contact the layer 20. The protrusions 62 pull the layer 20, which is assembled on top of the layer 22, through the apparatus 50. When the protrusions 62 contact the layer 20 at the ultrasonic horn 64, a sonic weld is created at the area where the filtration media 10 is captured between a protrusion and the horn. These multiple point bonds hold together the layers 20 and 22 together. The finished section of the filtration media 10 is released from the apparatus 50 as the roller 60 continues to rotate.

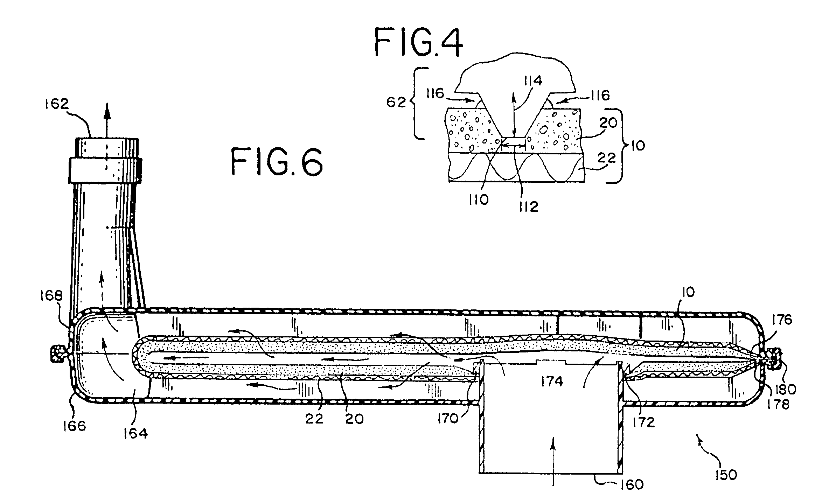

In a preferred embodiment of the sonic welding apparatus 50, the plurality of protrusions 62 are truncated cone-shaped. An exemplary truncated cone-shaped protrusion 62 contacting the layer of polyester felt 20 is illustrated in FIG. 4. As shown, each protrusion has a flat, round apex 110 that is about 0.025 to 0.25 inches in diameter 112, preferably about 0.025 inches. The apex 110 abuts the flat surface of the ultrasonic horn 64 to form the plurality of sonic weld spots to hold the layer 20 together with the layer 22. The preferred plurality of sonic weld spots occlude less than about 1 % of the surface area for the filtration media 10. The preferred protrusions 62 extend from the roller 60 a distance 114 of about 1/8 inch. The sides of the cone-shaped protrusions 62 may be at an acute angle 116, preferably about a 30° angle, with respect to the contact plane of the layer 20 as shown in FIG. 4. It has been found that the conical shape prevents tearing of the fibers of the layer 20 when the plurality of protrusions 62 contact and release the layer 20 as the layer 20, assembled on top of the layer 22, moves through the apparatus 50. Of course, the plurality of protrusions 62 may be varied in shape, pattern, size and number.

The preferred roller 60 is about 4 inches in diameter and about 5 feet wide to accommodate rolls of the layer 20 and the layer 22. Alternative roller sizes are possible and may be preferred depending on the layers 20 and 22 to be sonically welded.

The sonic weld is created when the plurality of protrusions 62 on the roller 60 contact the layer 20, assembled on the layer 22, over the ultrasonic horn 64. As shown in FIG. 3, the ultrasonic horn 64 may be a relatively smooth flat bar, the size of the flat bar corresponds to the width the roller 60 used in a particular embodiment of the present invention. In a preferred embodiment, the bar of the ultrasonic horn 64 is a flat bar about one inch wide and five feet long. Alternatively, the ultra sonic horn may be a roller with a relatively smooth surface wherein the sonic weld is formed to hold together the layers 20 and 22 at the contact points between the plurality of protrusions 62 on the roller 60 and the relatively smooth surface of the roller ultrasonic horn.

The ultrasonic horn 64 is vibrated by the sonic driver 66. In a preferred embodiment for forming the filtration media 10, the frequency of the ultrasonic horn 64 is about 10,000 to 40,000 cycles per second, more preferably about 20,000 cycles per second. The preferred weld cycle time for the ultrasonic horn 64 depends on variables such as the speed of the roller 60 feeding the layers 20 and 22 through the apparatus 50, the type and thickness of the materials comprising the layers 20 and 22, the engagement force of the roller 60 and the amplitude of the ultrasonic horn 64.

FIG. 2 shows a side elevation view of the filtration media 10 after the layer 20 is held together with the layer 22. The plurality of weld spots 24 are shown as conical indentations in the layer 20. As shown, the indentations formed in the layer 20 by the protrusions 62 during the sonic welding are preferably uniform across the filter. Additional benefits of the indentations formed include improved media flow through the filter. The plurality of weld spots 24 may act as traps to capture particulate and other contaminants in the fluid passing through the filtration media 10. The plurality of weld spots 24 may also help to promote cold flow of fluid through the filtration media 10 by increasing the surface area and partially penetrating the felt. The plurality of weld spots 24 may help prevent tunneling that occurs when the layer of polyester felt 20 may become eroded by concentrated fluid, flow such as in the area of the inlet or outlet of a filter unit.

FIG. 5 illustrates a transmission fluid filter 150 of a preferred embodiment of the present invention. The transmission fluid filter 150 may be used in an automatic transmission of an automobile. The transmission fluid filter 150 is designed to be placed in a transmission fluid sump area on the inlet side of the fluid pump. As shown, the filter 150 includes an inlet 160 on the bottom side and an outlet 162 extends from the top of the transmission fluid filter 150. The filter 150 also includes a base member 166 and a cover member 168.

FIG. 6 illustrates the filtration media 10 of the present invention in the transmission filter 150. As shown, the filtration media 10 may be built into the transmission fluid filter 150. U.S. Patent Nos. 4,826,598 and 5,049,274 describe transmission fluid filters in which the filtration media 10 can be used and are hereby incorporated herein by reference. As shown, the filtration media 10 is enclosed within a volume 164 formed between the base member 166 and the cover member 168 of the transmission fluid filter 150. In a preferred embodiment, the filtration media 10 is fashioned into an elongated, rectangular sheet, folded in half, and forming an envelope. The edges of the filtration media 10 are sealingly captured between the junction of flanged edges 170 and 172 around an opening 174. The ends 176 and 178 of the filtration media 10 are held together between the base member 166 and the cover member 168, which are sealed together by overmold 180.

Fluid flows into the transmission fluid filter 150 through the inlet 160, through opening 174, into the envelope created by the filtration media 10. As shown, the fluid first flows into the layer 20 of the filtration media 10 and then into the layer 22 and out of the filter 150 through the outlet 162. Thus, the filtration media 10 is interposed between the inlet 160 and the outlet 162 inside the volume 164 wherein the fluid first contacts the layer 20. The fluid moves through the layer 20 and then through the layer 22 that is sonically welded to the layer 20 before exiting out the outlet 162 of the transmission fluid filter 150.

FIG. 7 illustrates a top view assembly drawing of the filter 150. The filtration media 10 is shaped so that it can be doubled over inside the filter. The unfolded edges on three sides are sealingly captured between the peripheries of the base member 166 and the cover member 168. An elliptical hole 190 is provided through the filtration media 10 of the same shape and size as the opening 174 in the base member 166. The base member 166 includes generally parallel fluid flow spacer elements 192 extending up from and integral with the base wall 194. The cover member 168 also includes generally parallel flow spacer elements 196 extending downwardly from and integral with the cover wall 198.

When the filtration media 10 is used in the transmission fluid filter 150, the preferred flow rate is determined. The determinations described herein are for the filter described in U.S. Patent No. 5,049,274. When the transmission fluid filter 150 is assembled with filtration media 10 interposed between the inlet 160 and the outlet 162 and tested dry with a static vacuum of 330 mm Hg, the vacuum decay, in the preferred embodiment, may decay less than about 50 mm Hg/minute. When the transmission fluid filter 150 is tested with viscous fluid, at -40°F, the filtration media 10, in the preferred embodiment, may withstand about 635 mm Hg without being loosened at the junction of the flanged edges 170 and 172. Of course, other specifications for the preferred flow rate are possible for use with the filtration media 10 of the present invention. The filtration media 10 may also be inserted into other filtration devices commonly known in the art.

It should be appreciated that the products, apparatus and methods of the present invention are capable of being incorporated in the form of a variety of embodiments, only a few of which have been illustrated and described above. The invention may be embodied in other forms without departing from its spirit or essential characteristics. For example, the filtration media could be used to filter other liquids, rather than automotive fluids. It is therefore intended that the foregoing detailed description be regarded as illustrative rather than limiting, and that it be understood that it is the following claims, including all equivalents, that are intended to define the spirit and scope of this invention.

## Claims

1. A filtration media (10) comprising:
a) a layer of felt (20); and
b) a layer of woven screen (22);
c) thelayer of felt (20) and the layer of woven screen (22) assembled on top of one another and held together with a sonic weld (24).

2. The filtration media of claim 1, wherein the filtration media (10) is effective to trap particles of about 70 microns and larger.

3. The filtration media of claim 1 or 2, wherein the sonic weld comprises a plurality of spot welds (24).

4. The filtration media of claim 3, wherein the plurality of spot welds each have a diameter of about 0,025 inches.

5. The filtration media of any of the preceding claims, wherein the sonic weld occludes less than one percent of the surface of the filtration media.

6. A filter (150) comprising:
a) a housing (166, 168);
b) at least two non-identical layers (20, 22) of filtration material, assembled on top of one another, disposed within the housing (166, 168); and
c) the at least two layers (20, 22) of filtration material being held together with a sonic weld.

7. The filter of claim 6, wherein the at least two layers (20, 22) of filtration material comprise a layer of felt (20) and a layer of woven screen (22).

8. The filter of claim 6 or 7, wherein the sonic weld comprises a plurality of spot welds (24).

9. The filter of claim 8, wherein the plurality of spot welds (24) each have a diameter of about 0,025 inches.

10. The filter of any of the claims 6 to 9, wherein the sonic weld occludes less than one percent of the surface of the at least two layers (20, 22) of filtration material.

11. The filter of any of the claims 6 to 10, wherein the filter comprises a transmission fluid filter.

12. The filter of any of the claims 6 to 11, wherein the filter is effective to trap particles of about 70 microns and larger.

13. A method of manufacturing a filtration media (10) effective in trapping particles of about 70 microns and larger, the method comprising the steps of:
a) placing at least two layers (20, 22) of filtration material on top of one another; and
b) applying a sonic weld to hold together the at least two layers (20, 22);
c) the sonic weld being applied across a surface of the at least two layers (20, 22).

14. The method of claim 13, wherein the at least two layers (20, 22) of filtration material further comprise a layer of felt (20) and a layer of woven screen (22).

15. The method of claim 13 or 14, wherein the step of applying the sonic weld comprises applying a plurality of spot welds (24).

16. The method of claim 15, wherein the step of applying the plurality of spot welds (24) creates about 0,025 inch diameter weld spots (24) in the filtration media (10).

17. The method of any of the claims 14 to 16, wherein the step of applying the sonic weld occludes less than one percent of the filtration media (10).

18. The method of any of the claims 13 to 17, wherein the sonic weld further comprises the step of operating a sonic driver (64) having a roller (60) comprising a plurality of truncated cone-shaped protrusions (62).

19. The method of claim 18, wherein the plurality of truncated cone-shaped protrusions (62) comprise 30° angled sides and flat, round ends (110) of about 0,025 to 0,25 inch diameter.

20. The method of claim 18 or 19, wherein the roller (60) continuously feeds the assembled layers (20, 22) through an apparatus (50) for sonic welding.

21. The method of any of the claims 14 to 20, wherein the step of applying the sonic weld further comprises applying the sonic weld to the layer of felt (20) assembled on top of the layer of woven screen (22).

22. A method of filtration comprising the steps of:
a) providing a filter (150) comprising:
i) a housing (166, 168); and
ii) at least two layers (20, 22) of filtration material, assembled on top of one another, disposed within the housing (166, 168);
iii) wherein the at least two layers (20, 22) of filtration material are held together with a sonic weld; and
b) passing a fluid through the filter housing (166, 168) such that the fluid passes through the filtration material.

23. The method of claim 22, wherein the at least two layers (20, 22) of filtration material further comprise a layer of felt (20) and a layer of woven screen (22).

24. The method of claim 22 or 23, wherein the step of passing the fluid through the filter comprises passing the fluid through the layer of felt (20) and then through the layer of woven screen (22).

25. The method of any of the claims 22 to 24, wherein the step of providing the filter comprises providing a transmission fluid filter.
